# EUROPEAN PATENT APPLICATION

(11) **EP 0 689 343 A2**
(43) Date of publication of application: **27.12.1995**
(21) Application number: 95114137.3
(22) Date of filing: 01.04.1992
(51) Int. Cl.: H04N 3/12, G09G 3/34

(54) **DMD architecture and timing for use in a pulse-width modulated display system**

(30) Priority: 01.04.1991 US 678761
(62) Divisional of application: 92105601.6
(71) Applicant: TEXAS INSTRUMENTS INCORPORATED, Dallas Texas 75265 (US)
(72) Inventor: Urbanus, Paul M., Dallas, Texas 75248 (US); Sampsell, Jeffrey B., Plano, Texas 75074 (US)
(74) Representative: Schwepfinger, Karl-Heinz, Dipl.-Ing.

(57) **Abstract**

A memory unit comprises a decimation processor operable to receive and convert video data such that said video data can be loaded onto the control circuitry for a spatial light modulator array. At least one input buffer is electrically connected to said decimation processor, wherein said input buffer receives video data from said decimation processor. At least one input shift register is connected to said input buffer via a controlled bus for receiving data from said input buffer when said bus is controlled so as to allow the data to be transferred to said input shift register. To said input shift register at least one array of memory cells is connected to said input shift register for storing data received from said input shift register. An output shift register is electrically connected to said at least one array of memory cells. A controlled bus line electrically connected between an output shift register and the control circuitry for a spatial light modulator is provided such that said data is transferred from said array of memory cells to said output shift register and onto said bus in response to control signals from said controlled bus.

## Description

### BACKGROUND OF THE INVENTION

### 1. Field of the Invention

This invention deals with light modulators, more particularly with a memory unit used in connection with a spatial light modulator array.

### 2. Description of the Prior Art

Binary light modulators possess two states. One state, corresponding to a "zero", transmits no light. The other, corresponding to a "one", transmits light at the maximum intensity for whatever system is under consideration. In short, these modulators are either OFF or ON. As a result, only two discrete light levels exist for the viewer, black and maximum brightness. Intermediate levels during pixel on/off state changes are ignored as they are of relatively short duration. To achieve intermediate (similar to analog) levels of light as perceived by the viewer, pulse-width modulation (PWM) techniques are employed.

The basic PWM scheme is as follows. The rate at which the analog images are to be presented to the viewer is determined. This establishes a frame rate (frequency) and a corresponding frame time. In a standard television system, for example, images are transmitted at 30 frames per second, and each frame lasts for approximately 33.3 milliseconds.

The intensity quantization for each sampled point in the frame, or image, which maps to one picture element (pixel), is established. Assuming 6 bits of quantization, this means 1 part in 64, 63 of which are non-zero. In this example, the frame time of 33.3 msec in divided into 63 equal time slices. The resulting time slice, or least-significant-bit (LSB) time, equals 33.3 msec/63 or 528.6 microseconds.

Having established these times, all possible analog pixel intensities as seen by the viewer are scaled and quantized, such that black is 0 time slices and maximum brightness is 63 time slices. The scaled and quantized intensities set the on-time for the pixel so it is ON for the corresponding number of LSB times. In the simplest case, all pixels with a value more than zero are turned ON at the beginning of a frame time, and they remain ON for the number of LSB times which correspond to their relative analog intensity. The viewer's eye will integrate the points of maximum intensity so that it would appear the same as if they were a temporally constant analog level of light.

The maximum burst bandwidth requirements for a binary modulator High Definition Television (HDTV) display using this scheme can be calculated as follows. Assuming worst case, where all pixels in a given frame will have intensity values between black and maximum brightness, all pixels will have to change at the beginning of the next frame. The LSB time can be calculated as follows:
- Horizontal pixels: H = 1920
- Vertical pixels: V = 1080
- Intensity levels: I = 64
- Frame rate: F = 30 Frames/sec
- Colors per frame: R = 3 (each pixel displays each color sequentially)
LSB time 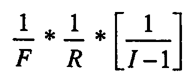
So for these values, the LSB time would be 176.3 microseconds. In this time period, 2,073,600 pixels (1920 X 1080) must be loaded. The data rate is given by the following: 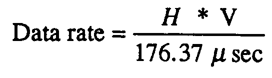
The data rate equals 11.76 Gigabits per second. The cost of building such a system is prohibitive.

There are many ways to implement PWM to lower the effective data rate. The data can be input to the pixel in a highly parallel fashion. For example, an input shift register which is partitioned into section of 8 pixels each, with an off-chip data input to each shift register can be added. For 1920 pixels that would be 240 shift registers, sharing a common clock. These 240 shift registers could be loaded with one row of data, using only eight clock pulses. The reduces the data rate by a factor of 240, or 49.1 Mbits/second.

Additionally, the outputs of each shift register could drive a parallel data latch. This data latch stores the contents of the input shift registers after they have been filled. This allows the input shift registers to accept a new row of data while the previously latched data is stored in the selected row of the pixel array. Consequently, the pixel array will be addressed at a rate 8 times slower than that which the input circuitry is operating. This limits the high speed circuitry needed for the pixel chip. The input shift register/parallel latch combination can be added at the top and bottom of the array. This allows the top and bottom half of the device to be addressed simultaneously. Now each set of registers/latches need only read in half the data in a given frame time. So the data rate is reduced by another factor of two. The new input data rate is 24.55 Mbits/second, but the pin count is 480.

While these architectural changes have drastically reduced the per pin input data rate to the pixel array at the expense of increased pin count, they have also imposed a constraint on the method of addressing the pixel. While the single input method is random access, the modified architectures of this type require the pixels to be addressed a row at a time.

According to the present invention in a first aspect thereof there is proved a display system comprising:
a) a receiver capable of receiving a standardized composite audio and video signal;
b) a tuner for isolating the video component;
c) a decimation processor for converting said video component into a set of signals for use with a spatial light modulator unit where said processor converts said video component by digitising said component into digital words in rasterised format removes said words from said rasterized format and connects said words into a spatial format;
d) a memory storage unit for storing said signals;
e) a light source;
f) a spatial light modulator array controlled by said stored signals that modulates light from said light source to produce an image; and
g) optics to project said image.

According to the present invention in a further aspect thereof there is provided an integrated circuit device comprising;
a) an array of spatial light modulator elements divided into subarrays whereby said subarrays are operated as a block, such that each of said subarrays acts as an entire array;
b) an array of decoders, at least one for every one of said subarray whereby said decoders format incoming data to allow said subarrays to process in formation as a block; and
c) an array of input registers, at least one for every one of said subarrays whereby said input registers transfer incoming data to said decoders.

According to the present invention in a yet further aspect thereof there is provided a memory unit comprising;
a) a decimation processor whereby said decimation processor converts incoming data into a spatial format to facilitate loading of a spatial light modulator;
b) at least one input buffer electrically connected to a decimation processor;
c) a controlled bus line out of said buffer;
d) at least one input shift register;
e) at least one array of memory cells;
f) at least one output shift register; and
g) a controlled bus line electrically connected between said output shift registers and a spatial light modulator circuit.

According to the present invention in an even yet further aspect thereof there is provided a method of displaying data comprising addressing and loading the contents of memory cells onto display pixels so that each bit level of significance is displayed for the appropriate portion of the total frame time, whereby said most significant bit of data is displayed for a portion of said total frame time approximately equal to one-half the total frame time, and each of said bits displayed are displayed in halves of the time allocated to the next highest significant bit.

### Example

Total frame time = 32 milliseconds, 4 bits

| | | |
|---|---|---|
| most significant bit | - bit 0 16 milliseconds | (16) |
| next | - bit 1 1/2 16 milliseconds | ( 8) |
| next | - bit 2 1/2 8 milliseconds | ( 4) |
| next | - bit 3 1/2 4 milliseconds | ( 2) |
| Total | | 30 milliseconds |

"Spatial format" includes any format adapted for the array, for example, a column by column format rather than the line by line format of a typical television transmission.

A problem solved by the invention is the use of arrays with data in line by line format. To perform a conversion raises the issue of the high data rate, which is another problem solved by the present invention.

### SUMMARY OF THE INVENTION

Other objects and advantages will be obvious, and will in part appear hereinafter and will be accomplished by the present invention which provides a system for display of visual data. The system has as its parts a receiver, a tuner unit, a projection system and optics to make the data from the receiver viewable by an observer. The projection system further comprises a signal processing unit, a decimation processor, a memory unit, and a spatial light modulator circuit, including a light source.

The received data is of some existing standardized format, which is passed to the tuner unit. The tuner isolates the video signal and provides it to the signal processing unit which performs analog/digital conversion and enhances the signal. The digital signals are passed to the decimation processor for conversion into a format for the memory unit. The memory unit receives and holds the data until a full frame is prepared for display. The memory unit then provides the stored digital signals to the spatial light modulator array. The spatial light modulator array deflects selected ones of said array to modulate light from the light source. The modulated light passes to the viewer through the optics.

### BRIEF DESCRIPTION OF THE DRAWINGS

For a complete understanding of the invention, and the advantages thereof, reference is now made to the following description in conjunction with the accompanying drawings, in which:
FIGURE 1 shows a block representation of a television system.
FIGURE 2 shows a decimation processor.
FIGUREs 3a, 3b, and 3c show some frame memory schemes.
FIGURE 4 shows a deformable mirror device (DMD) integrated circuit device.
FIGURE 5 shows an implementation of a block-clearing architecture.
FIGUREs 6a and 6b show timing diagrams for reducing burst data rate of addressing, using a block-clearing architecture.
FIGURE 7 shows a timing diagram for bit-period sharing addressing, using a block clearing architecture.
FIGURE 8 shows a timing diagram for total addressed reset addressing.
FIGURE 9 shows a diagram of a DMD superstrate with an integrated circuit device.
FIGURE 10 shows an exploded view of a DMD integrated circuit device.
FIGURE 11 shows an example of forced data and multiple simultaneous row addressing enhancements.
FIGURE 12 shows an alternative approach for a forced data addressing enhancement.

### DETAILED DESCRIPTION OF THE PREFERRED EMBODIMENTS

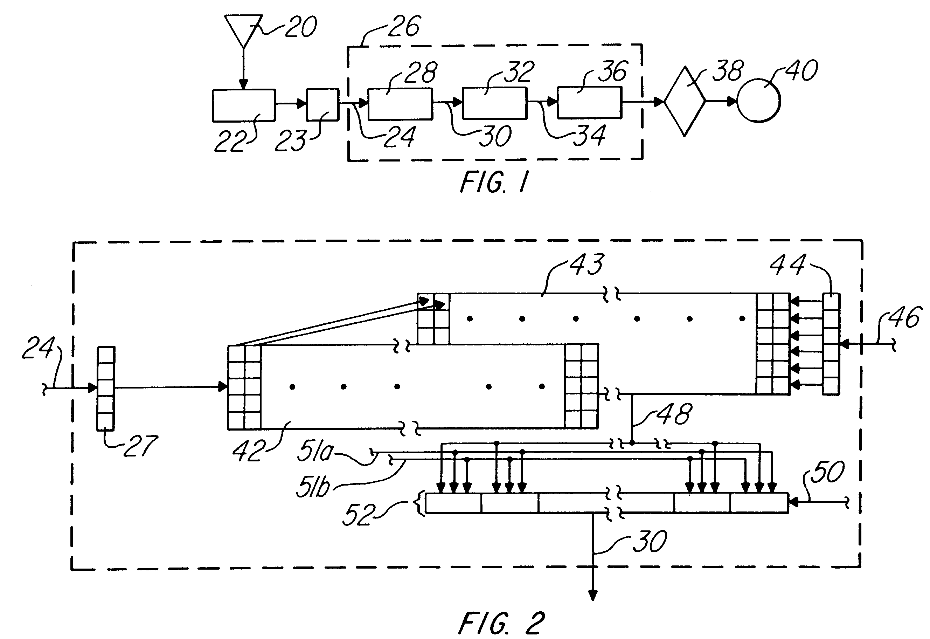

Figure 1 shows a block diagram of a preferred embodiment television system incorporating teachings of the present invention. Receiver 20 receives the television signal of some standardized format and passes it to the tuner unit 22. Tuner unit 22 splits the signal into an audio and a video component. The audio portion of the signal will not be considered further. The tuner passes the video signal into a signal processing unit 23 for analog to digital conversion and other enhancements. This step is only necessary if digital signals are desired. The enhanced digital signal 24 is sent to the projection system 26 which contains a decimation processor 28, a frame store 32 and a deformable mirror device circuit 36. The decimation processor converts the signal into a format for memory storage, and provides an output signal 30. This converted signal 30 then passes to the frame store circuitry where the data for each complete frame is gathered and stored. After a complete frame is stored, the data 34 is then passed to the DMD circuit 36 which generates the image through the optics 38 to the viewer 40.

An example of a suitable decimation processor 28 is shown in greater detail in Figure 2. Enhanced digital data 24 enters the processor as a selected number of samples such as 6-bit samples for input register 27. For disclosure purposes the system shown is 6 bits, with the most-significant bit (MSB) is bit 5 and the least-significant bit (LSB) is bit 0. It is understood that these circuits could be easily set up to handle any number of bits desirable.

The 6-bit sample is then sent to a 1920 x 6-bit shift register 42. After the shift register 42 has been filled with 1920 data samples, the data in the shift register is passed to a directly connected "shadow memory" 43, which is also 1920 x 6-bits. The shadow memory 43 is considered to be an array of 6 rows, each consisting of 1920 bits. The data bits stored in any given row are of equal binary weight. For example, row 1 of the shadow memory might contain all of the bit 0 data from the 1920 input samples, row 2 has all of the bit 1 samples, etc. Each row in the shadow memory 43 is selected for readout by the output of a 1:6 decoder 44. The desired row is specified by a 3-bit select signal 46 input to the decoder. The selected row of 1920 bits from the shadow memory 43 is then applied to a data bus 48 where it is sent to the data input of an array of 240 8:1 multiplexers 52. A 3-bit control signal 50 for horizontal position selection is sent simultaneously to all 8:1 multiplexers, which produce a 240-bit data stream 30. All 8 horizontal positions are sequentially selected by control signal 50.

An alternative embodiment to the 8:1 multiplexers could consist of 240 8-bit shift registers with a common clock 51b and common load control 51a. In this instance, reference number 52 would refer to an array of shift registers instead of an array of multiplexers. The selected row of 1920 bits from the shadow memory 43 is then applied to data bus 48 where it is sent to the data input of an array of 240 8:1 shift registers 52. Load control 51a is asserted to cause the contents of data bus 48 to be stored in an individual 8-bit shift register from the array 52. Then 8 successive pulses are applied to 51b which cause the data in the shift register to be output onto data bus 30. The data stream 30 for each horizontal position passes into the frame store memory.

In both embodiments, the decimation processor 28 performs an inverse mapping function. The 1920 input samples of 6 bits each are stored in such a manner that these samples may be accessed as 6 output samples of 1920 bits. Each of the 6 output samples is then multiplexed to minimize the number of output connections from the decimation processor. This output multiplexing also serves to match the format of the data to the input data format of the DMD. The above embodiment is for a monochrome system. In order to accomplish a color system, the decimation processor can be duplicated as needed.

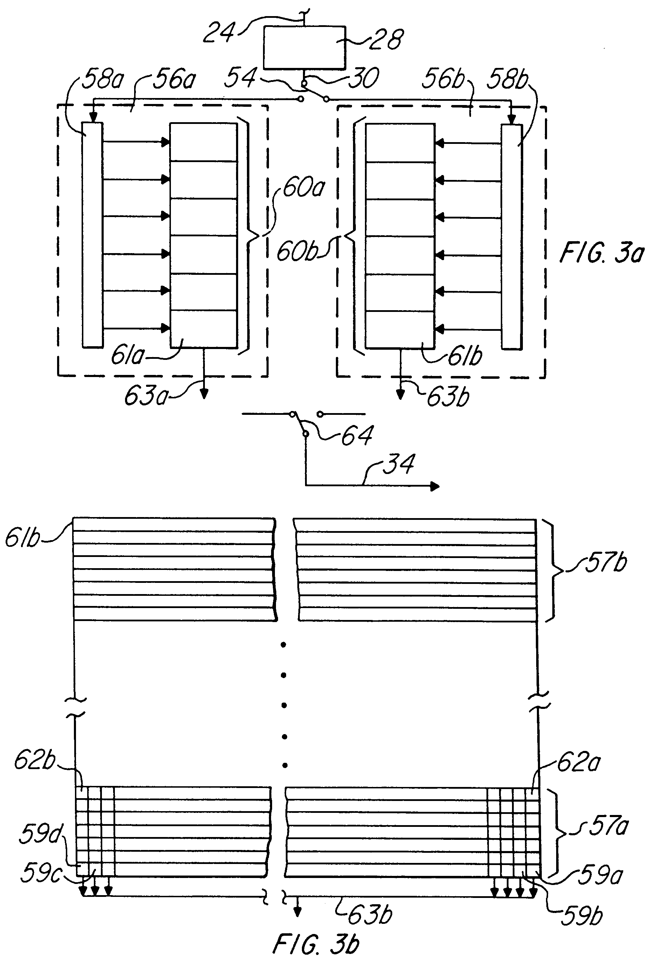

Figure 3a shows a monochrome implementation for the frame store 32. After signal 24 is converted via decimation processor 28 and passed as signal 30 to the frame store memory, it is directed to one of two video frame memories 56a and 56b. If 56a currently is being displayed, the data stream 30 is directed by switch 54 to locations in frame memory 56b. The locations in memory cell array 60b, to which data stream 30 is directed are specified by address pointer 58b. Memory cell array 60b is composed of individual subarrays, one of which is 61b. All of the data bits of like weight (significance) for the frame which is being stored in memory cell array 60b are stored in the same subarray, one of which is 61b. When the system has finished displaying the contents of memory 56a, the contents of memory 56b are sent to the system via the output bus 63b of memory cell array 60b and switch 64. In order to have color, this scheme could be duplicated as needed as with the decimation processor.

An exploded view of individual subarray 61b is shown in Figure 3b. The subarray 61b is divided into rows of smaller cells. A group of rows 57a, or 57b, constitutes one video line of data. In this embodiment, where one half of a 1920 X 1080 array is addressed at one time, 57a represents line 1, and 57b represents line 540. Cell 59a holds the data for line 1, pixel 0. Cell 62a holds the data for line 1, pixel 7. The cells between them in the column hold data for pixels 1-6 for line 1. Similarly, cell 59b holds the data for pixel 8, line 1. Cell 59c holds the data for pixel 1904, line 1, and 59d holds the data for pixel 1912, line 1. The last pixel in line 1, pixel 1919 is held in cell 62b. The data is sent via bus 63b through switch 64 to the DMD array. This scheme is repeated for however many video lines are in the system, for each of the individual subarrays as shown in Figure 3a.

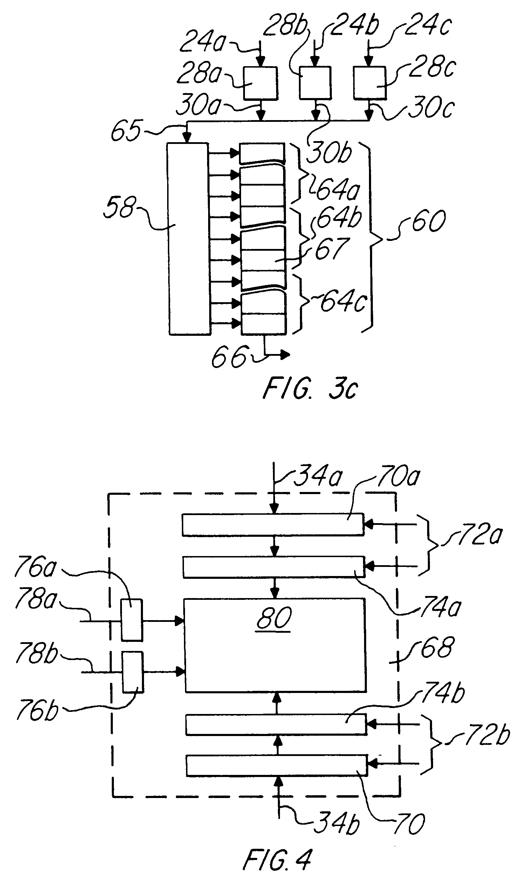

Another embodiment for a color system is shown in Figure 3c. The video signal is fed into three decimation processors via lines 24a, 24b and 24c. Decimation processors 28a, 28b and 28c send the converted data along lines 30a, 30b and 30c to a bus line 65. The data on bus line 65 is loaded into the memory location specified by address pointer 58. Pointer 58 then loads the memory cell array 60 by color. The top third of the registers 64a is for color 1, the second third 64b for color 2 and the bottom third 64c for color 3. Individual subarray 67, which is identical to the other subarrays shown, is similar to the detailed drawing in Figure 3b. Data processed in this manner would lead to the sending of all three colors sequentially to the DMD circuitry.

One embodiment of the DMD integrated circuit is shown in Figure 4. Data from the frame store circuitry 32 is passed to the integrated circuit device 68 via bus 34 in Figure 1. Line 34 can actually be divided into two busses, 34a and 34b. Bus 34a conducts the data for the upper half of the DMD array, and bus 34b conducts the data for the lower half of the array mirrors. The data is sent to a shift register 70a. When the register is full, the data is then passed to a parallel latch 74a. The set of lines 72a controls the loading of the shift register and the parallel latch. After the data is latched, it travels to the upper half of a 1920 X 1080 array of the actual deformable mirror devices 80. The row of the addressing circuitry under the mirrors is selected by the row select line 78a through row decoder 76a. Simultaneously, the same operations are occurring in the lower half of the array. The mirrors of the array are then addressed and deflected to produce an image which is passed through optics to the viewer.

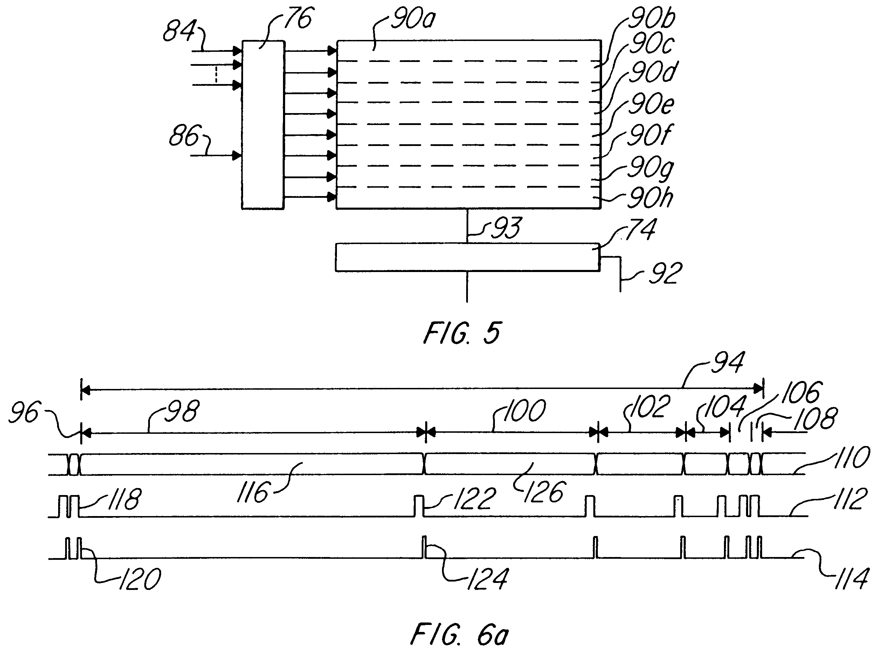

At this point the DMD display device consists of a DMD pixel array, input shift registers and latches, and row select decoders. The architecture is now modified to allow all of the pixels in a selected block of the DMD to be switched to the OFF state in a short amount of time, as shown in block form in Figure 5. The parallel storage latches 74 are modified to include a CLEAR line 92 in Figure 5. The CLEAR line causes the data driving the columns in the DMD array to be set to a state corresponding to the OFF pixel position when asserted. Additionally, the row select decoder 76 is modified to add a number of select lines which serve to cause one block of rows such as 90a to be selected at the same time.

To set a block of pixels to the OFF state, the CLEAR line 93 to the parallel storage latches 74 is asserted. Next, the block select line 84 for the block of pixel rows to be switched to the OFF state is asserted. Finally, a reset pulse is applied to the individual beam mirrors and the mirror are deflected to the OFF state. Although eight blocks of rows are shown in Figure 5, with the rows of a given block being consecutive, there is no reason to be limited to this arrangement. The number of blocks may vary between 1 and the designer's imagination. Also, row of pixels in the blocks may be connected in an interleaved (or any other) configuration instead of consecutively.

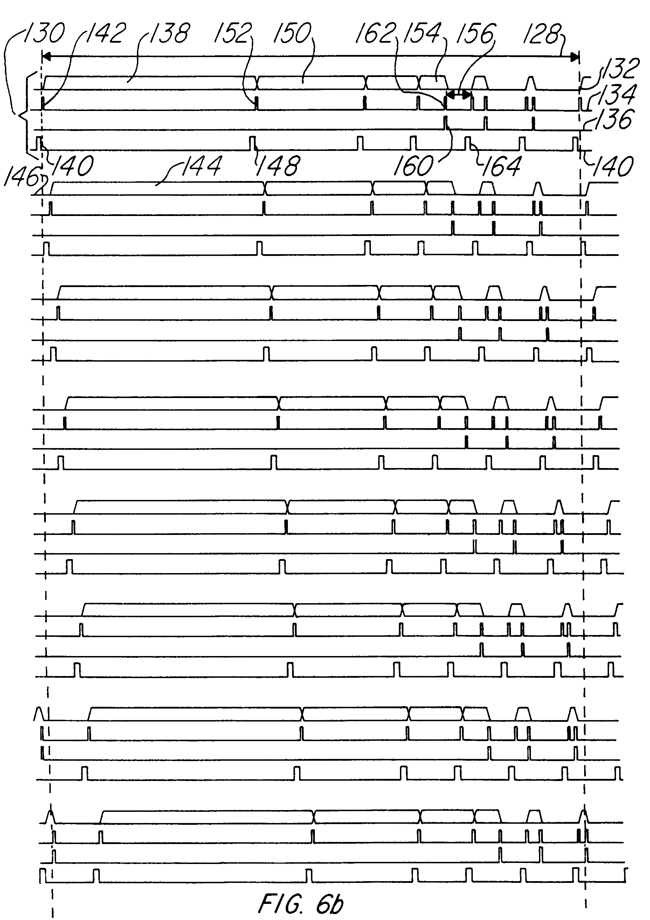

The minimum peak data rate is determined by the shortest time interval in which all of the bits of a given significance must be loaded onto the DMD array. The collection of all data bits of the same binary weight from a given frame is referred to as a bit-frame. For a 6-bit system, there are 6 bit-frames of data per frame. It is desirable to reduce the peak data rate, most likely by sacrificing some other aspect of the DMD display system performance. The timing scheme shown in Figures 6a and 6b for a 6-bit system allows just such a compromise. In Figure 6a, the timing for the standard addressing scheme is shown for comparison value. The length of one frame time is shown on line 96. Line 98 is the data-in bus, and the pulses indicate that a bit-frame of data is being transferred to the device over the data-in bus 98 and the lack of pulses indicates that no data transfer is taking place. The width of the pulses on data-in bus 98 is equal to 1 LSBit-time. Line 100 is the beam-reset line. After the data has been transferred to the device, the beam-reset line 100 is pulsed which causes the pixel mirrors to assume the state as specified by the most recently loaded bit-frame of data. The amount of time between successive beam-reset pulses corresponds to the binary weight of the most recently loaded bit-frame of data. Figure 6a shows that the state of the pixel mirrors corresponds to the least-significant bit-frame of data for a period of time 99 which is equal to one LSBit time or one time-slice. During time 99 the next bit-frame of data must be completely loaded. Since time 99 is the shortest time interval in which a bit-frame must be loaded, time 99 is the constraining data load time for minimum burst data rate. Although the DMD has been loaded sequentially with bit-frames of data in decreasing order of binary bit-frame weight, any arbitrary ordering of the bit-frame for loading may be implemented.

Figure 6b shows a data-reduced method of addressing using the architecture shown in Figure 5. Lines 104a through 104h show the timing for each block 90a through 90h from Figure 5. As in Figure 6a, lines 104a through 104h represent the data-in bus. However, the pulses indicate that 1/8 of a bit-frame of data is being transferred to the device over the data-in bus 104a through 104h and the lack of pulses indicates that no data transfer is taking place, and the width of the pulses is equal to 1 LSBit-time. Although there are 8 different data-in buses 104a through 104h, these are physically the same data-in bus, but are shown as separate lines to conceptually associate each of the lines 104a through 104h with the corresponding blocks 90a through 90h from Figure 5. After each 1/8 of a bit-frame is transferred to the corresponding block, the beam-reset line is pulsed to cause the state of the pixel mirrors to correspond to the most recently loaded data for a given block 90a through 90h. The most significant bits (MSBs), in this embodiment the MSB is bit 5, 106a are loaded up in the first 8 consecutive LSBit times. After the appropriate number of LSB times (32 for the MSB in a 6-bit system), as indicated by reference number 107, the next-to-most significant bit 106b is loaded in the blocks and held for the proper number of LSB times.

This process is continued until bit 2, block 4 is loaded as indicated by reference number 94. It should be noted that bit 4 has a 16 LSB time, bit 3 has a 8 LSB time and bit 2 has a 4 LSB time. Hence, after block 4, bit 2 has been loaded, the time for block 1 bit 2 has expired. The this point, one of two things must occur. Block 1 must assume the state of block 1, bits 1 or 0. This is not possible because blocks 5 - 8 have not yet been loaded with their respective bit 2 data. The other thing which can occur is for the pixels mirrors in block 0 to be turned off or cleared for al least 4 LSB times, while blocks 5-8 are loaded. This is shown by implulse 102. The method for clearing block 0 is as previously described using the architecture shown in Figure 5. The amount of time required to clear block 0 (or any other block) is a very small fraction of the time required to load a block, thus the binary time weighting is preserved. This method results in a significant decrease in peak data rate per pin. The decrease in data rate is a factor of 8 and results from only 1/8 as many lines being loaded in 1 LSB time in Figure 6b contrasted to Figure 6a. However, there is a decrease in efficiency of the optical output of the system which is due to the always being turned off. In this case, the pixels are always turned off for 17 LSB times out of 80 LSB times in frame time 96.

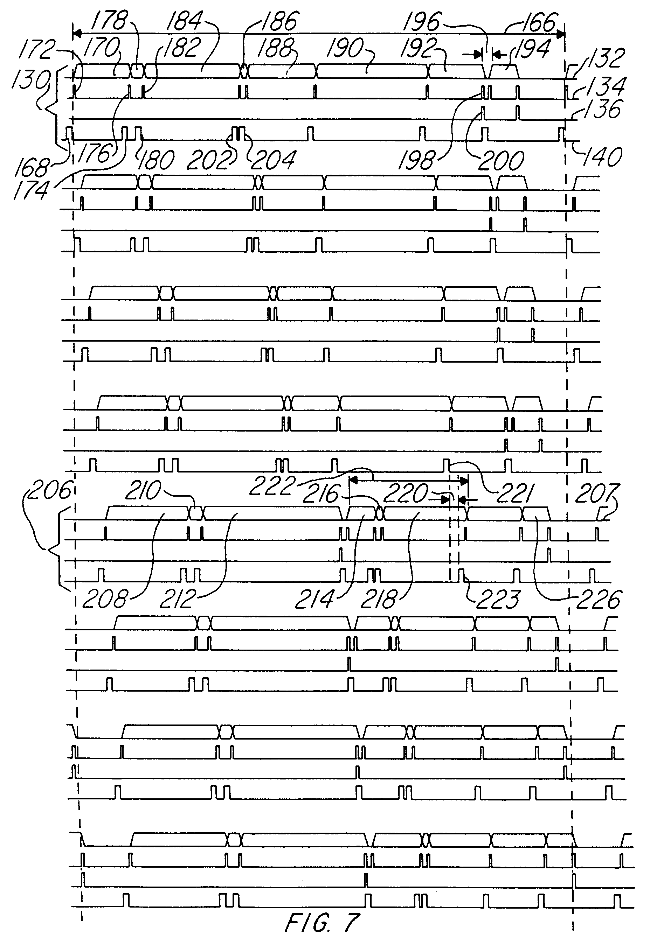

It is possible to improve the performance of the block clearing architecture previously described. If the order in which the bits are sent to the chip is changed, the same peak data rate can be maintained while at the same time increasing the optical efficiency. Recall that when making the transition from basic PWM addressing to binary PWM addressing, it was stated that there was no loss suffered by breaking up the continuous ON-time of a pixel into several smaller, binary-weighted and possibly discontinuous ON-times. All that matters is that the total ON-time be the same. If this logic is extended a bit further, it is clear that there is no reason to keep the OFF time associated with any given bit period continuous either. With this in mind, the order in which data is sent to the DMD will now be rearranged, as shown in Figure 7.

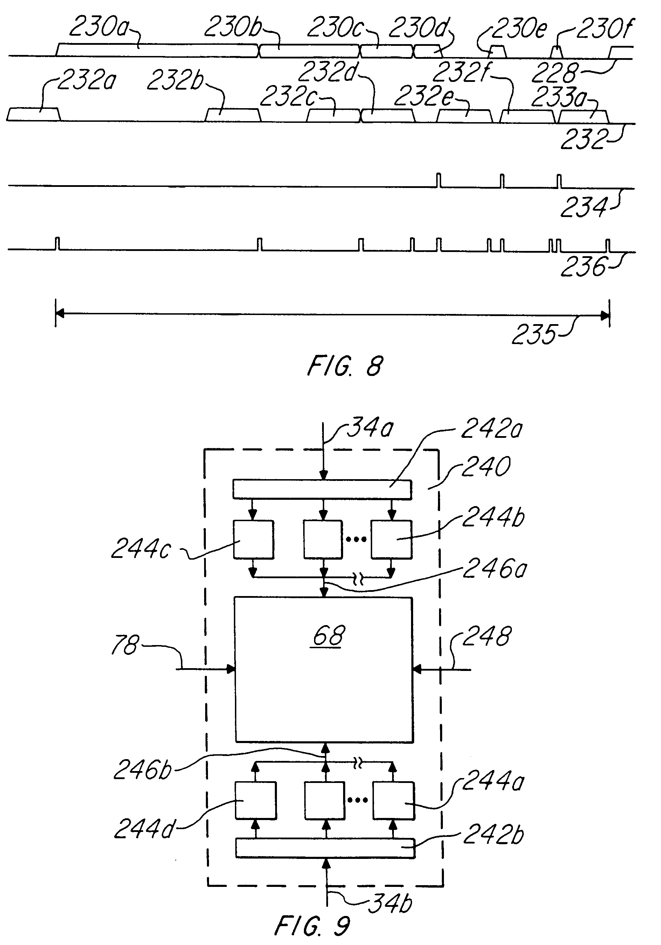

Notice in figure 8 that several of the low-order bits ar now sent out to the DMD in the middle of the MSB times, then the MSBs are reloaded. The idea is to take advantage of the idle bus time. In some blocks, bit 5 is loaded into the device 3 different times. Although this increases the average per-pin data rate, it has no effect on the per-pin peak data rate, the constraining factor. At the same time, the number of OFF pixel LSB times has been reduced from 17 to 8, which reduces the optical efficiency loss by more than a factor of 2.

Line 96 is the original frame time. Line 98 is the standard addressing timing. Line 108 is the original frame time plus 8 LSB times. As can be seen by looking at the bit groupings, bit 5 106a is loaded and displayed for 8 LSB times. After 8 LSB times, bit 1 106e is loaded and displayed for 2 bit-frames times, which completes the requirements for bit 1 display completely. After the 2 LSB times, bit 5 106a is reloaded and displayed for another 16 LSB times, raising it's total display time to 24 LSB times. Blocks 5-8 continue to display bit 5 data for the remaining necessary 8 LSB times, while blocks 1-4 are reloaded with bit 0 106f for 1 LSB time. Since bit 0 only needs 1 LSB time, bit 5 106a is reloaded into blocks 1-4 and held for the remaining 8 necessary LSB times, followed by a reset pulse. Bit 4 106b is then loaded into all blocks for 8 LSB times. After 8 LSB times, blocks 1-4 continue to display bit 4 data, while blocks 5-8 load and display bit 0 data 106f, thus completing the requirements for bit 0. Bit 4 data 106b is then loaded back onto blocks 5-8 and displayed for the remaining 8 LSB times. Bit 3 106c is then loaded and displayed for 8 LSB times, followed by bit 2 106d for 4 LSB times, completing the requirements for all bits and blocks.

It is desirable to avoid the effects associated with a multitude of reset pulses in a given frame time, so a method of addressing the DMD is desirable which avoids these potential effects. Figure 8 shows one such method, referred to as the total addressed reset (TAR) method. There are three primary differences from this method and the bit-period sharing method discussed above.

First, in the TAR method the whole DMD is loaded with he bit-frame data for a particular bit before a reset pulse is applied to the pixels, while the bit-period method loads a part of the DMD (one block) and then applies a reset to the whole device. Second, in the TAR method the whole device is loaded in 8 LSB times. In the previous method, the whole device was loaded in 8 intervals of one bit-frame each, resulting in the same overall frame time. Finally, there is a smaller amount of overlap between loading data and viewing data for the TAR method.

In Figure 8, line 110 demonstrates what the viewer sees. The viewer sees bit 6 106a being on for an extended period of time, followed by bit 5 106b for half of the time of bit 6. The pattern continues until it reaches the point of time between bits 2 106e and 1 106f. At this point there is actually a period of all of the bits being OFF. Of course, in reality the viewer cannot actually see this because it is a far high frequency than the critical flicker frequency of the human eye. After the appropriate amount of time, bit 1 106f is displayed, followed by another off period, and then bit 0 106g is displayed.

Line 112 is the timing of the data in loads. Bit 6 106a is loaded just before display time for bit 6 shown on line 110. Similarly, all bits are loaded just previous to the display time on line 110. The loading intervals are the same for each bit. Line 114 is the address reset line and 116 is the beam reset line. The address reset is for resetting those pixels that have been addressed only. There is a considerable reduction in the number of reset pulses sent to the beams. This eliminates mechanical wear and tear on the mechanical parts of the beams.

An architecture that allows the above discussed processes to be implemented is shown in Figure 9. The simple DMD chip 68 from Figure 4 has become one part of the DMD superstrate 118. Lines 34a and 34b come into the circuit via demultiplexers (8:128) 124a and 124b. The resultant signals are sent out in 16-bit lines to First-In First-Out (FIFO) buffers 120a through 120b and 120c through 120d. The outputs of the FIFOs are transferred to the DMD chip via lines 122a and 122b. Control signals enter the DMD chip via line 78, line select, and line 126, frame reset.

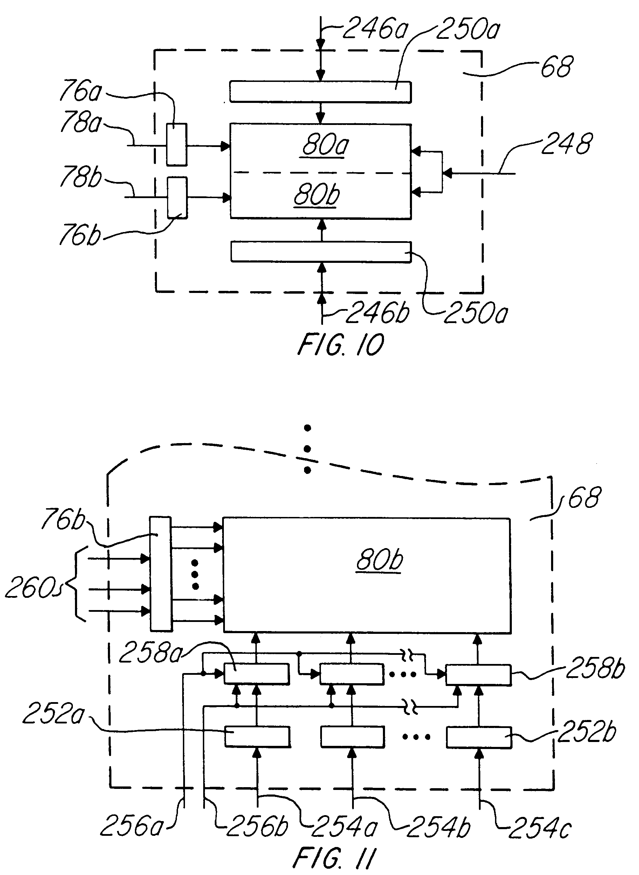

An exploded view of the DMD device 68 is shown in Figure 10. Data from the bus lines 122a and 122b enter the mirror arrays 80a and 80b via the demultiplexers (1:8 x 128) 128a and 128b. Line select signal 78 is divided into a lower line select which enters the decoder for the lower array 76b and a upper line select which enters the upper array decoder 76a. The frame reset signal on line 126 is also divided to access lower mirror array 80b and upper mirror array 80a. This revised architecture can support the different addressing schemes discussed above, in addition to many others, making the device much more versatile and adaptable.

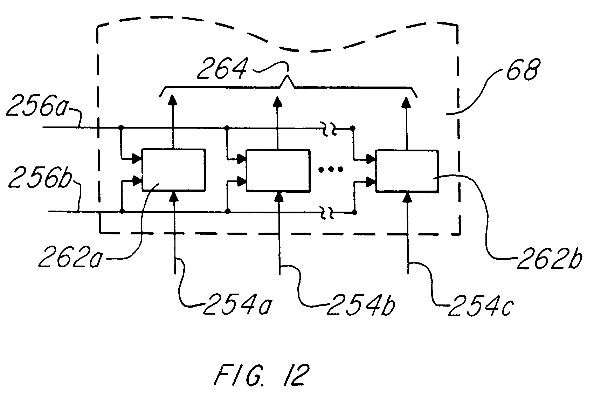

Additional enhancements may be made to the above architecture to increase the speed. One of such enhancements is to have a data input structure such that either the normal input data may be selected or a constant input data may be selected. Such an enhancement is shown in Figure 11. For normal data input, where the data is unique, the output from the input data multiplexers 130a through 130b which are fed through lines 134a through 134c, is selected to drive the array columns. For forced data input, where the data is constant, the forced data on lines 132a and 132b is applied to the columns. Selection of this data is accomplished by multiplexers 136a and 136b. This allows constant data to be applied to the rows of the DMD mirror array (shown as the lower array) 80b at a rate which is limited by the speed of the forced data multiplexer and the row select decoder 76b with input lines 138 which are control signals determining multiple or individual row selections.

Another of such an enhancement allows multiple rows to be addressed simultaneously by constructing the decoder such that there rows may be addressed single or in groups. The grouping is arranged for the maximum benefit of the given application. Thus, the grouping may be such that any number and combination of rows may be addressed as a single group, and any number of groups may be defined. This definition of groups then specifies the decoder construction. Alternatively, the decoder may be made programmable so that groups may be user defined. This implementation is shown in Figure 12 for a shift register input structure, with input shift registers 142a through 142b receiving input from lines 134a through 134c and sending it to the DMD array through lines 140.

Thus, although there has been described to this point a particular embodiment for a display system and its architecture, it is not intended that such specific references be considered as limitations upon the scope of this invention except in-so-far as set forth in the following claims.

## Claims

1. A memory unit comprising:
a decimation processor operable to receive and convert video data such that said video data can be loaded onto the control circuitry for a spatial light modulator array;
at least one input buffer electrically connected to said decimation processor, wherein said input buffer receives video data from said decimation processor;
at least one input shift register connected to said input buffer via a controlled bus for receiving data from said input buffer when said bus is controlled so as to allow the data to be transferred to said input shift register;
at least one array of memory cells connected to said input shift register for storing data received from said input shift register;
an output shift: register electrically connected to said at least one array of memory cells;
a controlled bus line electrically connected between an output shift: register and the control circuitry for a spatial fight modulator, such that data is transferred from said array of memory cells to said output shift: register and onto said bus in response to control signals from said controlled bus.

2. The unit of claim 1 wherein there is one input shift register per color in the system, and the data for the each color is stored in a separate array of memory cells, such that the output register receives the data for each color in sequence.
